(19)

Europäisches Patentamt

European Patent Office

Office européen des brevets

(11) **EP 4 170 843 A1**

(12) **EUROPEAN PATENT APPLICATION**
published in accordance with Art. 153(4) EPC

(43) Date of publication:
**26.04.2023  Bulletin 2023/17**

(21) Application number: **20943343.2**

(22) Date of filing: **03.07.2020**

(51) International Patent Classification (IPC):
**H02J 1/10** (2006.01)         **H02J 7/00** (2006.01)

(52) Cooperative Patent Classification (CPC):
**H02J 1/10; H02J 7/00;** Y02E 60/10

(86) International application number:
**PCT/CN2020/100148**

(87) International publication number:
**WO 2022/000473 (06.01.2022 Gazette 2022/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Digital Power Technologies Co., Ltd.**
**Shenzhen, Guangdong 518043 (CN)**

(72) Inventors:
• **TUO, Hong**
  **Shenzhen, Guangdong 518129 (CN)**
• **CAI, Yi**
  **Shenzhen, Guangdong 518129 (CN)**
• **DU, Changlei**
  **Shenzhen, Guangdong 518129 (CN)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **CHARGE/DISCHARGE EQUALIZATION CONTROL METHOD, BATTERY ASSEMBLY, AND ELECTRIC SYSTEM**

(57)    This application provides a charging/discharging equalization control method, a battery component, and an electricity consumption system. The battery component includes M battery modules, the M battery modules are connected in parallel, and M is a positive integer greater than 1. Each battery module includes a control unit, a DCDC converter, and an energy storage unit. The control unit is electrically connected to the DCDC converter, and the DCDC converter is further electrically connected to a load and/or a power supply. For each battery module, the method includes: The control unit determines a reference value of a power parameter, where the reference value is used to equalize charging/discharging of the M battery modules; and the control unit controls, by using the DCDC converter, an actual value of the power parameter to be equal to the reference value. This implements equalized charging/discharging of M battery modules, and further implements a parallel power of battery modules with different capacities in the battery component, so as to resolve a problem in a related technology that a high requirement is imposed on consistency of cell packs in battery modules because the battery modules are used in parallel.

FIG. 2

EP 4 170 843 A1

## Description

## TECHNICAL FIELD

This application relates to the field of battery management, and in particular, to a charging/discharging equalization control method, a battery component, and an electricity consumption system.

## BACKGROUND

In a high-power backup scenario such as a communication field or a data center, a battery is often required to meet a parallel power requirement. In some other scenarios, a requirement on a power supply voltage range of the battery is also high. As a result, if a plurality of batteries are simply directly connected in parallel, it is very difficult to meet the parallel power requirement and a narrow charging/discharging voltage range requirement.

Currently, the foregoing requirement is met by directly connecting cell packs in parallel, and each cell pack includes a combination formed by a plurality of cells connected in series or in series and parallel. However, in this manner, a requirement on consistency of the cell packs is high. If cell packs of different manufacturers or different types are used together, due to an impact of a factor such as a state of health, an internal resistance difference, or a line impedance of the cell pack, a circulating current easily occurs between the cell packs, and consequently a parallel power coefficient and a parallel capacity coefficient are reduced. This is not conducive to continuous use of the cell pack. There is also a potential safety risk.

## SUMMARY

This application provides a charging/discharging equalization control method, a battery component, and an electricity consumption system, applied to a high-power backup scenario such as a data center, a communication station, and an energy storage power station, to equalize charging/discharging of M battery modules, and further implement a parallel power of battery modules with different capacities in the battery component, so as to resolve a problem in a related technology that a high requirement is imposed on consistency of cell packs in battery modules because the battery modules are used in parallel.

According to a first aspect, this application provides a charging/discharging equalization control method, applied to a battery component, where the battery component includes M battery modules, the M battery modules are connected in parallel, and M is a positive integer greater than 1. Each battery module includes a control unit, a DCDC converter, and an energy storage unit. The control unit is electrically connected to the DCDC converter, and the DCDC converter is further electrically connected to a load and/or a power supply.

For each battery module, the method includes: The control unit determines a reference value of a power parameter, where the reference value is used to equalize charging/discharging of the M battery modules; and the control unit controls, by using the DCDC converter, an actual value of the power parameter to be equal to the reference value.

In the charging/discharging equalization control method provided in the first aspect, when the battery component is charged/discharged, the control unit in each battery module may control, by using the DCDC converter in the battery module, the actual value of the power parameter corresponding to the battery module to be equal to the reference value, so that charging/discharging of the M battery modules can be equalized, and a parallel power of battery modules with different capacities in the battery component is implemented. Therefore, a problem in a related technology that a high requirement is imposed on consistency of cell packs in battery modules because the battery modules are used in parallel is resolved. In this way, cell packs and/or batteries that are electrically connected to each other in any manner and that are of different manufacturers, different health degrees, or even different models may be used for energy storage units in the M battery modules. There is no need to consider an impact of a factor such as a state of health, an internal resistance difference, or a line impedance of the cell pack and/or the battery, and there is no need to use the battery component through derating to implement charging/discharging. This improves charging/discharging efficiency of the battery component, and implements maximum backup duration to meet a power supply requirement of the load or implements minimum charging duration to supplement electricity in a timely manner. This further helps ensure durability and safety of the battery component, prolongs a service life of the battery component, and reduces component costs of the battery component.

In a possible design, that the control unit controls, by using the DCDC converter, an actual value of the power parameter to be equal to the reference value includes: The control unit inputs a control signal to the DCDC converter in a loop control manner based on the reference value, where the control signal is used to control the actual value of the power parameter to be equal to the reference value. Therefore, a possible implementation is provided to enable the actual value of the power parameter to be equal to the reference value.

In a possible design, when the power parameter is a current of the battery module, that the control unit determines a reference value of a power parameter includes: When the power supply supplies power to the energy storage unit, the control unit determines a charging coefficient, and determines the reference value based on the charging coefficient and a sum of actual values of currents respectively corresponding to the M battery modules.

In a possible design, when the power parameter is a current of the battery module, that the control unit determines a reference value of a power parameter includes: When the energy storage unit supplies power to the load, the control unit determines a discharging coefficient, and determines the reference value based on the discharging coefficient and a sum of actual values of currents respectively corresponding to the M battery modules.

In a possible design, when the power parameter is a power of the energy storage unit, that the control unit determines a reference value of a power parameter includes: When the power supply supplies power to the energy storage unit, the control unit determines a charging coefficient, and determines the reference value based on the charging coefficient and a sum of actual values of powers of energy storage units respectively corresponding to the M battery modules.

In a possible design, when the power parameter is a power of the energy storage unit, that the control unit determines a reference value of a power parameter includes: When the energy storage unit supplies power to the load, the control unit determines a discharging coefficient, and determines the reference value based on the discharging coefficient and a sum of actual values of powers of energy storage units respectively corresponding to the M battery modules.

In a possible design, the charging coefficient is a ratio of a chargeable capacity value of the energy storage unit to a sum of chargeable capacity values of the energy storage units respectively corresponding to the M battery modules.

Therefore, in this application, the ratio of the chargeable capacity value of the energy storage unit in each battery module to the sum of the chargeable capacity values of the energy storage units respectively corresponding to the M battery modules may be used to adjust the current of the battery module or the power of the energy storage unit in each battery module, so that charging power parameters corresponding to the battery modules are adjusted in equal proportion. Therefore, the battery modules complete charging simultaneously, and charging of the M battery modules is equalized. This helps the power supply supplement the battery component with electricity in a timely manner, and helps implement minimum charging duration of the battery component and implement maximum backup duration after an input has power failure.

In a possible design, the charging coefficient is a ratio of a calculated value of a voltage of the energy storage unit to a sum of calculated values of voltages of the energy storage units respectively corresponding to the M battery modules.

Therefore, in this application, the ratio of the calculated value of the voltage to the sum of the calculated values of the voltages respectively corresponding to the M battery modules may be used to adjust a charging power parameter corresponding to each battery module, so that the voltages of the energy storage units in the battery modules are adjusted in equal proportion. Therefore, the battery modules complete charging simultaneously, and charging of the M battery modules is equalized. This helps the power supply supplement the battery component with electricity in a timely manner, and helps implement maximum backup duration of the battery component.

In a possible design, the discharging coefficient is a ratio of a dischargeable capacity value of the energy storage unit to a sum of dischargeable capacity values of the energy storage units respectively corresponding to the M battery modules.

Therefore, in this application, the ratio of the dischargeable capacity value of the energy storage unit in each battery module to the sum of the dischargeable capacity values of the energy storage units respectively corresponding to the M battery modules may be used to adjust a discharging power parameter corresponding to each battery module, so that the dischargeable capacity values of the energy storage units in the battery modules are adjusted in equal proportion. Therefore, the battery modules complete discharging simultaneously and implement undervoltage protection, and discharging of the M battery modules is equalized. This helps the battery component supply power to the load in a timely manner, and helps implement maximum backup duration of the battery component.

In a possible design, the discharging coefficient is a ratio of a calculated value of a voltage of the energy storage unit to a sum of calculated values of voltages of the energy storage units respectively corresponding to the M battery modules.

Therefore, in this application, the ratio of the calculated value of the voltage of the energy storage unit to the sum of the calculated values of the voltages of the energy storage units respectively corresponding to the M battery modules may be used to adjust a discharging power parameter corresponding to each battery module, so that the voltages of the energy storage units in the battery modules are adjusted in equal proportion. Therefore, the battery modules complete discharging simultaneously, and discharging of the M battery modules is equalized. This helps the power supply system supplement the load with electricity in a timely manner, and helps implement maximum backup duration of the battery component.

In a possible design, the energy storage unit includes a plurality of energy storage units, and the calculated value of the voltage of the energy storage unit includes any one of the following: a lowest voltage value or a highest voltage value of all the energy storage units, an average voltage value of all the energy storage units, a sum of voltages of all the energy storage units, or a logical value having an association relationship with any one of a lowest voltage value or a highest voltage value of all the energy storage units and an average voltage value of all the energy storage units or a sum of voltages of all the energy storage units.

According to a second aspect, this application provides a battery component, where the battery component includes M battery modules, the M battery modules are connected in parallel, and M is a positive integer greater than 1. Each battery module includes a control unit, a DCDC converter, and an energy storage unit. A first terminal of the DCDC converter is electrically connected to the control unit, a second terminal of the DCDC is electrically connected to the energy storage unit, and a third terminal of the DCDC converter is configured to be electrically connected to a load and/or a power supply.

For each battery module, the control unit is configured to determine a reference value of a power parameter, where the reference value is used to equalize charging/discharging of the M battery modules. The control unit is further configured to control, by using the DCDC converter, an actual value of the power parameter to be equal to the reference value.

In a possible design, the control unit is specifically configured to input a control signal to the DCDC converter in a loop control manner based on the reference value, where the control signal is used to control the actual value of the power parameter to be equal to the reference value.

In a possible design, when the power parameter is a current of the battery module, the control unit is specifically configured to: when the power supply supplies power to the energy storage unit, determine, by the control unit, a charging coefficient, and determine the reference value based on the charging coefficient and a sum of actual values of currents respectively corresponding to the M battery modules; or when the energy storage unit supplies power to the load, determine, by the control unit, a discharging coefficient, and determine the reference value based on a sum of the discharging coefficient and a sum of actual values of currents respectively corresponding to the M battery modules.

In a possible design, when the power parameter is a power of the energy storage unit, the control unit is specifically configured to: when the power supply supplies power to the energy storage unit, determine, by the control unit, a charging coefficient, and determine the reference value based on the charging coefficient and a sum of actual values of powers of energy storage units respectively corresponding to the M battery modules; or when the energy storage unit supplies power to the load, determine, by the control unit, a discharging coefficient, and determine the reference value based on the discharging coefficient and a sum of actual values of powers of energy storage units respectively corresponding to the M battery modules.

In a possible design, the charging coefficient is a ratio of a chargeable capacity value of the energy storage unit to a sum of chargeable capacity values of the energy storage units respectively corresponding to the M battery modules, or the charging coefficient is a ratio of a calculated value of a voltage of the energy storage unit to a sum of calculated values of voltages of the energy storage units respectively corresponding to the M battery modules.

In a possible design, the discharging coefficient is a ratio of a dischargeable capacity value of the energy storage unit to a sum of dischargeable capacity values of the energy storage units respectively corresponding to the M battery modules, or the discharging coefficient is a ratio of a calculated value of a voltage of the energy storage unit to a sum of calculated values of voltages of the energy storage units respectively corresponding to the M battery modules.

In a possible design, the energy storage unit includes a plurality of energy storage units, and the calculated value of the voltage of the energy storage unit includes any one of the following: a lowest voltage value or a highest voltage value of all the energy storage units, an average voltage value of all the energy storage units, a sum of voltages of all the energy storage units, or a logical value having an association relationship with any one of a lowest voltage value or a highest voltage value of all the energy storage units and an average voltage value of all the energy storage units or a sum of voltages of all the energy storage units.

In a possible design, the chargeable capacity value of the energy storage unit or the dischargeable capacity value of the energy storage unit is obtained by performing integral processing on an actual value of a current of the energy storage unit. Alternatively, the chargeable capacity value of the energy storage unit or the dischargeable capacity value of the energy storage unit is obtained by performing integral processing on an actual value of a current of the energy storage unit and by performing correction processing based on at least one of an actual value of the voltage, an actual value of a temperature, and an amplification coefficient of the energy storage unit.

For beneficial effects of the battery component provided in the second aspect and the possible designs of the second aspect, refer to the beneficial effects brought by the first aspect and the possible implementations of the first aspect. Details are not described herein again.

According to a third aspect, this application provides an electricity consumption system, including a load, a power supply, and the battery component in any one of the second aspect or the possible designs of the second aspect. The power supply supplies power to the battery component and the load. The battery component is configured to supply power to the load when the input power supply has power failure or the battery component needs to be discharged, to ensure that the electricity consumption system runs normally.

For beneficial effects of the electricity consumption system provided in the third aspect and the possible designs of the third aspect, refer to the beneficial effects brought by the second aspect and the possible implementations of the second aspect. Details are not described herein again.

## BRIEF DESCRIPTION OF DRAWINGS

FIG. 1 is a schematic diagram of a structure of a battery component according to an embodiment of this application;

FIG. 2 is a schematic diagram of a structure of a battery module according to an embodiment of this application;

FIG. 3 is a schematic flowchart of a charging/discharging equalization control method according to an embodiment of this application; and

FIG. 4 is a schematic diagram of a structure of an electricity consumption system according to an embodiment of this application.

Description of reference numerals:

1-electricity consumption system; 20-load; 30-power supply;

10-battery component; 11-control unit; 12-DCDC converter; 13-energy storage unit; Ill-sampling module; 112-calculation module; 113-communication module; 114-BMS; 115-auxiliary circuit.

## DESCRIPTION OF EMBODIMENTS

This application provides a charging/discharging equalization control method, a battery component, and an electricity consumption system, applied to a high-power backup scenario such as a data center, a communication station, and an energy storage power station. A ratio of a charging/discharging power of each battery module to a sum of charging/discharging powers of all battery modules connected in parallel in the battery component may be adjusted to be equal to or infinitely close to a ratio of an equivalent remaining chargeable/dischargeable capacity of each battery module to a sum of equivalent remaining chargeable/dischargeable capacities of all the battery modules connected in parallel in the battery component, or to be equal to or infinitely close to a ratio of a calculated value of a voltage of each battery module to a sum of calculated values of voltages respectively corresponding to M battery modules, so that charging/discharging of the battery modules connected in parallel in the battery component is equalized (equalizing charge or discharge), and the battery modules connected in parallel in the battery component can complete charging or discharging simultaneously. This helps implement maximum backup duration of the battery component to meet a power supply requirement of a load, and also helps implement minimum charging duration of the battery component to supplement the battery component with electricity in a timely manner. In addition, there is no need to use a parallel power of the battery modules in the battery component through derating, to improve use performance of the battery component, and resolve a problem in a related technology that a high requirement is imposed on consistency of cell packs in battery modules due to a parallel power of the battery modules. In this way, cell packs and/or capacitors of different manufacturers, different health degrees, or even different models may be randomly selected for the battery modules connected in parallel. This facilitates continuous use of the battery component, increases a service life of the battery component, and reduces component costs of the battery component.

That a parallel connection exists in battery modules or battery modules are connected in parallel (battery modules parallel connection) means that power ports of the battery modules are connected in parallel (that is, are physically electrically connected) and are communicatively connected in parallel (that is, information exchange is implemented). The communicative parallel connection includes: The battery modules are directly connected in parallel by using a communication bus (bus), so that the battery modules can communicate with each other, or the battery modules can send respective information to any battery module or another device such as a host computer, so that the battery module or the another device distributes processed information to each battery module.

Charging/discharging equalization means that the battery modules connected in parallel are simultaneously charged to respective maximum chargeable capacities, or the battery modules connected in parallel are simultaneously released to respective maximum dischargeable capacities.

The parallel power means that the battery modules connected in parallel may be jointly charged/discharged, that is, jointly release electricity to a load 20 and jointly receive charging from a power supply 30, and a maximum power at which power can be supplied to the load 20 is a sum of maximum powers output by the battery modules connected in parallel.

A specific implementation of the battery component in this application is described in detail below by using a specific embodiment.

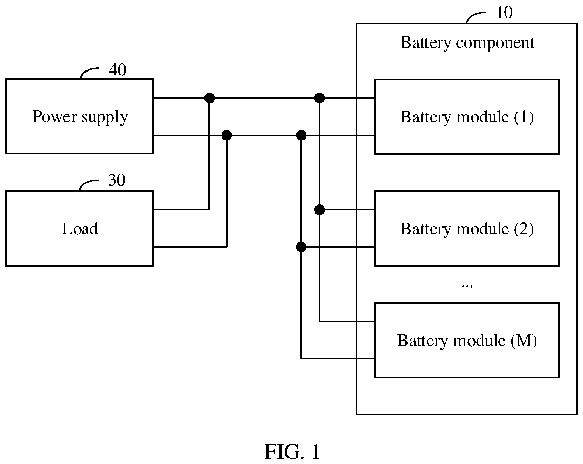

FIG. 1 is a schematic diagram of a structure of a battery component according to an embodiment of this application. As shown in FIG. 1, a battery component 10 includes M battery modules, M battery modules are connected in parallel, and M is a positive integer greater than 1. The M battery modules that are electrically connected in parallel may be configured to be electrically connected to a power supply 30, or may be configured to be electrically connected to a load 20, or may be configured to be electrically connected to both a power supply 30 and a load 20.

The power supply 30 is configured to provide a direct current. The power supply 30 may be obtained by converting an alternating current power supply by using a component such as a rectifier and a filter, or may be obtained by converting a direct current power supply by using a component such as a DCDC power converter. The direct current power supply may supply power to a high voltage direct current (HVDC) transmission, a wind energy panel, a solar panel, or the like.

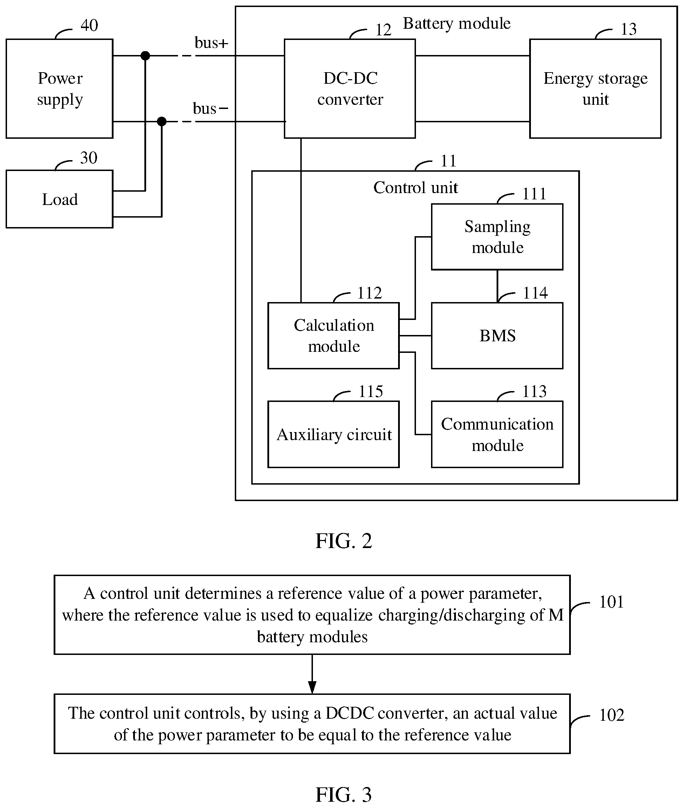

FIG. 2 is a schematic diagram of a structure of a battery module according to an embodiment of this application. As shown in FIG. 2, each battery module may include a control unit 11, a DCDC converter (direct current-direct current converter, direct current-direct current converter) 12, and an energy storage unit 13. For ease of description, any battery module in FIG. 2 is used as an example.

The control unit 11 is electrically connected to the DCDC converter 12. The control unit 11 and the DCDC converter 12 may be connected in a wired or wireless manner, for example, connected by using a network cable or a power line carrier or in a wireless manner.

The DCDC converter 12 is further configured to be electrically connected to the load 20, so that the battery component 10 can supply power to the load 20, or the DCDC converter 12 is further configured to be electrically connected to the power supply 30, so that the power supply 30 supplies power to the battery component 10, or the DCDC converter 12 is further configured to be electrically connected to both the load 20 and the power supply 30, so that the battery component 10 supplies power to the load 20 and the power supply 30 supplies power to the battery component 10. In addition, each battery module is generally not charged and discharged simultaneously.

It should be noted that the connection between the DCDC converter 12 and each of the load 20 and the power supply 30 may include another module, or may not include another module. This is not limited in this application. For ease of description, in FIG. 2, a dashed line is used as an example of the connection between the DCDC converter 12 and each of the load 20 and the power supply 30.

In some embodiments, a first terminal of the DCDC converter 12 is electrically connected to a first terminal of the energy storage unit 13, a second terminal of the DCDC converter 12 is electrically connected to a second terminal of the energy storage unit 13, a third terminal of the DCDC converter 12 is electrically connected to a first terminal of the power supply 30 and/or a first terminal of the load 20, and a fourth terminal of the DCDC converter 12 is electrically connected to a second terminal of the power supply 30 and/or a second terminal of the load 20.

In some other embodiments, a first bus W1 and a second bus W2 may be disposed in this application, and the first bus W1 and the second bus W2 are configured to provide a direct current such as 48vDC. The DCDC converter 12, the power supply 30, and the load 20 may be electrically connected in parallel between the first bus W1 and the second bus W2, to implement the electrical connection between the DCDC converter 12 and the power supply 30 and the electrical connection between the DCDC converter 12 and the load 20.

The control unit 11 may be an integrated chip such as a micro control unit (microcontroller unit, MCU) 11 or a system on chip (system on a chip, SoC), may be formed by combining a plurality of components, or may be formed by combining an integrated chip and a peripheral circuit. This is not limited in this application.

For example, the control unit 11 is an MCU. Still with reference to FIG. 2, the MCU may include a sampling module 111, a calculation module 112, a communication module 113, and a battery management system (battery management system, BMS) 114.

The sampling module 111 is configured to perform sampling on parameters such as a voltage of a port of the energy storage unit 13, a current of the port of the energy storage unit 13, a current (which is briefly referred to as a current of the battery module) of a port of the battery module, and a voltage (namely, a voltage $U_{bus+-bus-}$ between a bus+ and a bus-) of the port of the battery module.

The communication module 113 is configured to: receive data transmitted by another battery module and/or receive data transmitted by another device such as a host computer, and transmit data of the battery module to another battery module or another device, to implement information sharing. A specific implementation of the communication module 113 is not limited in this application, for example, a wireless manner, or a wired manner, or an infrared manner.

The BMS 114 is configured to calculate a chargeable/dischargeable capacity of the energy storage unit 13 and perform another battery management function.

The calculation module 112 is configured to: calculate a reference value of a power parameter, and output a control signal to the DCDC converter 12 based on the reference value of the power parameter, to enable an actual value of the power parameter to be equal to the reference value.

In addition, the MCU may further include an auxiliary circuit 115, for example, a necessary power supply circuit or a filter circuit.

The DCDC converter 12 is a voltage converter that effectively outputs a fixed voltage after converting an input voltage. Generally, the DCDC converter 12 has three main control technologies: 1. pulse width modulation (pulse width modulation, PWM); 2. pulse frequency modulation (pulse frequency modulation, PFM); and 3. pulse width modulation-pulse frequency modulation (PWM-PFM). For example, the DCDC converter 12 may adjust a duty cycle of an input direct current by using a control signal, to control a magnitude of an effective output voltage. A type of the control signal may be a PWM signal, a PFM signal, and a PWM-PFM signal. In addition, parameters such as a type and a quantity of DCDC converters 12 are not limited in this application. For example, the DCDC converter 12 may be a unidirectional DCDC converter 12, or may be a bidirectional DCDC converter 12. Alternatively, the DCDC converter 12 may be a boost DC/DC converter, a buck DC/DC converter, or a buck-boost DC/DC converter.

It should be noted that the DCDC converter 12 and the control unit 11 may be disposed integrally or separately. This is not limited in this application. In addition, through disposition of the DCDC converter 12, it may be determined that the battery modules connected in parallel can be charged/discharged at a constant voltage (constant voltage charge or discharge), that is, an end voltage $U_{bus+-bus-}$ (namely, a port voltage of a busbar) between the bus+ and the bus- in FIG. 2 may be constant or vary, so that a requirement of the load 20 or a power supply requirement of the battery module can be met.

Constant voltage charging/discharging means that voltages (namely, an end voltage that may also be referred to as a load voltage or a power supply voltage) of output ports of all battery modules in the battery component 10 remain constant and unchanged in a rated charging/discharging process based on the requirement of the load 20 or the power supply requirement of the battery component 10, and are not affected by a voltage change of the energy storage unit 13 during charging/discharging.

As a power storage part of the battery module, the energy storage unit 13 may be charged and/or discharged. In each battery module, there may be one or more energy storage units 13. Each energy storage unit 13 may be one or more cells (for example, in a form of a cell pack), or may be one or more capacitors, or may be a combination of a cell and a capacitor. This is not limited in this application. When the energy storage unit 13 includes a plurality of cells, the plurality of cells may be connected in series, or may be connected in parallel, or may be connected in series and parallel. This is not limited in this application. When the energy storage unit 13 includes a plurality of capacitors, the plurality of capacitors may be connected in series, or may be connected in parallel, or may be connected in series and parallel. This is not limited in this application.

It should be noted that, generally, parameters such as types, quantities, and capacities of energy storage units 13 in all the battery modules are generally the same. Parameters such as types, quantities, and capacities of energy storage units 13 in different battery modules may be the same or different. This is not limited in this application. For example, if the battery component 10 in this application includes a first battery module and a second battery module, an energy storage unit 13 in the first battery module and an energy storage unit 13 in the second battery unit may be cells, and parameters such as cell quantities, cell manufacturers, cell health degrees, battery models, and connection relationships of the first battery module and the second battery module may be the same or different. Alternatively, the energy storage unit 13 in the first battery module may be a cell, and the energy storage unit 13 in the second battery module may be a capacitor.

The charging/discharging equalization control method in this application is applied to the battery component 10 in the embodiments in FIG. 1 and FIG. 2. The following describes in detail a specific implementation process of the charging/discharging equalization control method in this application with reference to FIG. 3 by using the control unit 11 in each battery module as an execution body.

FIG. 3 is a schematic flowchart of a charging/discharging equalization control method according to an embodiment of this application. As shown in FIG. 3, the charging/discharging equalization control method in this application may include the following steps:

S 101. A control unit 11 determines a reference value of a power parameter, where the reference value is used to equalize charging/discharging of M battery modules.
S102. The control unit 11 controls, by using a DCDC converter 12, an actual value of the power parameter to be equal to the reference value.

A person skilled in the art may understand that a power can represent a capacity. Based on the foregoing descriptions, a control unit 11 in each battery module comprehensively considers a charging/discharging status of an energy storage unit 13 in each battery module, and may determine a reference value of a power parameter corresponding to the battery module.

The function parameter may include any parameter in a current, a voltage, and a power. The reference value is a value that needs to be reached by the power parameter corresponding to each battery module when each battery module is charged/discharged, so that charging/discharging of the M battery modules is equalized.

When a preset condition is met, the control unit 11 may control the energy storage unit 13 to stop being charged or discharged. Specific content of the preset condition is not limited in this application.

In some embodiments, the preset condition may include that the control unit 11 receives an instruction used to instruct the energy storage unit 13 to stop being charged or discharged. A specific implementation and a source of the instruction are not limited in this application. For example, the energy storage unit 13 does not need to continue to be charged/discharged, or the energy storage unit 13 has completed discharging, and a voltage of the energy storage unit 13 decreases to a critical voltage, so that undervoltage protection of the battery component 10 can be implemented, or the energy storage unit 13 has completed charging.

In some other embodiments, the preset condition may include that a quantity of chargeable/dischargeable battery modules in the M battery modules is less than or equal to 1. "Chargeable/dischargeable" herein means that a chargeable capacity or a dischargeable capacity of the battery module is not zero. It should be noted that both the foregoing two cases may be met for the preset condition, and the preset condition is not limited to the foregoing two cases.

Therefore, when the battery component 10 is charged/discharged, the control unit 11 in each battery module may control, by using the DCDC converter 12 in the battery module, the actual value of the power parameter corresponding to the battery module to be equal to the reference value, so that charging/discharging of the M battery modules can be equalized, and a parallel power of battery modules with different capacities in the battery component 10 is implemented. Therefore, a problem in a related technology that a high requirement is imposed on consistency of cell packs in battery modules because the battery modules are used in parallel is resolved. In this way, cell packs and/or batteries that are electrically connected to each other in any manner and that are of different manufacturers, different health degrees, or even different models may be used for energy storage units 13 in the M battery modules. There is no need to consider an impact of a factor such as a state of health, an internal resistance difference, or a line impedance of the cell pack and/or the battery, and there is no need to use the battery component 10 through derating to implement charging/discharging. This improves charging/discharging efficiency of the battery component 10, and implements maximum backup duration to meet a power supply requirement of the load 20 or implements minimum charging duration to supplement electricity in a timely manner. This further helps ensure durability and safety of the battery component 10, prolongs a service life of the battery component 10, and reduces component costs of the battery component 10.

A person skilled in the art may understand that power P=voltage U×current I. Based on this, in this application, the power parameter may be a current of the battery module, may be a power of the energy storage unit 13, or may be a voltage of the energy storage unit 13. In addition, the power parameter includes a charging power parameter and a discharging power parameter.

With reference to a feasible implementation, the following describes, by using an example, a specific implementation process in which the control unit 11 controls, by using the DCDC converter 12, the actual value of the power parameter to be equal to the reference value in S102.

In this application, the control unit 11 in each battery module may output a control signal to the DCDC converter 12 in a loop control manner based on the reference value, where the control signal is used to control an actual value of a current of the battery module to be equal to a reference value.

A specific type of the loop control manner is not limited in this application, for example, single-loop or multi-loop proportional-integral-derivative control (proportional-integral-derivative control, PID control). In addition, the control unit 11 may implement the loop control manner by using a software algorithm and/or a hardware circuit (for example, a compensation circuit such as a type I compensator, a type II compensator, or a type III compensator). For a specific implementation of the control signal, refer to the foregoing descriptions. Details are not described herein again.

In addition, in a same battery component 10, at a same moment, power parameters corresponding to battery modules on which parallel equalization is implemented are the same, and loop control manners or types may be the same or different. This is not limited in this application.

PID control and that the power parameter is the current of the battery module are used as an example to describe the foregoing process.

The control unit 11 uses a difference between the reference value and a sampling value as a loop input, and outputs a control signal to the DCDC converter 12 in a loop control manner such as PID control, so that the DCDC converter 12 can adjust the actual value of the current of the battery module based on the control signal, and at any moment, the actual value of the current of the battery module is fed back to a loop input side of PID control as a sampling value. Therefore, the control signal output to the DCDC converter 12 dynamically changes, so that the actual value of the current of the battery module can be continuously close to the reference value, and the actual value of the current of the battery module can be finally equal to or infinitely close to the reference value.

In this application, chargeable capacity values of energy storage units 13 respectively corresponding to the M battery modules may be the same or different. The chargeable capacity value of the energy storage unit 13 is a remaining chargeable capacity value of the energy storage unit 13.

Therefore, when the power supply 30 supplies power to the energy storage unit 13, each battery module is charged based on a ratio of a chargeable capacity value of the energy storage unit 13 in each battery module to a sum of chargeable capacity values of the energy storage units 13 respectively corresponding to the M battery modules, so that the M battery modules are charged in equal proportion based on the chargeable capacity values of respective energy storage units 13, that is, in a same time period, a battery module with a large chargeable capacity is charged for a longer time than a battery module with a small chargeable capacity. Therefore, the M battery modules may complete charging simultaneously, and reach a charging end point simultaneously, to implement maximum backup duration after an input has power failure at any time.

The control unit 11 in each battery module may obtain the chargeable capacity value of the corresponding energy storage unit 13 in a plurality of manners.

In some embodiments, the chargeable capacity value of the energy storage unit 13 is obtained by performing integral processing on an actual value of a current of a port of the energy storage unit 13, for example, a formula $Q = Q1 - \int_0^t \text{idt}$ is used, where Q1 is an initial chargeable capacity, so that the chargeable capacity value of the energy storage unit 13 can be quickly obtained by performing integral processing on a charging/discharging current.

In some other embodiments, the chargeable capacity value of the energy storage unit 13 is obtained by performing integral processing on an actual value of a current of a port of the energy storage unit 13 and by performing comprehensive calculation processing based on one or more of an actual value of a voltage of a port, an actual value of a temperature, and a charging coefficient of the energy storage unit 13, to obtain the chargeable/dischargeable capacity value of the energy storage unit 13.

Each battery module may obtain, in a plurality of manners, the sum of the chargeable capacity values of the energy storage units 13 respectively corresponding to the M battery modules.

For example, each battery module sends the chargeable capacity value of the corresponding energy storage unit 13 to another device such as a host computer. The another device adds the chargeable capacity values of the respective energy storage units 13 in the M battery modules to obtain the sum of the chargeable capacity values of the energy storage units 13 respectively corresponding to the M battery modules, and separately sends, to the M battery modules, the sum of the chargeable capacity values of the energy storage units 13 respectively corresponding to the M battery modules.

For another example, each battery module broadcasts the chargeable capacity value of the energy storage unit 13 in the battery module to another battery module, so that each battery module can add the chargeable capacity values of the respective energy storage units 13 in the M battery modules to obtain the sum of the chargeable capacity values of the energy storage units 13 respectively corresponding to the M battery modules.

For another example, one battery module in the M battery modules receives a chargeable capacity value of a corresponding energy storage unit 13 that is sent by another battery module, and the battery module adds the chargeable capacity values of the respective energy storage units 13 in the M battery modules to obtain the sum of the chargeable capacity values of the energy storage units 13 respectively corresponding to the M battery modules, and separately sends, to the another battery module, the sum of the chargeable capacity values of the energy storage units 13 respectively corresponding to the M battery modules.

It should be noted that, in this application, data transmitted by each battery module to another battery module or another device may be the chargeable capacity value of the energy storage unit 13, or may be a dischargeable capacity value of the energy storage unit 13 and a maximum storage capacity value of the energy storage unit 13. The maximum storage capacity value of the energy storage unit 13 is a sum of the chargeable capacity value of the energy storage unit 13 and the dischargeable capacity value of the energy storage unit 13. This is not limited in this application.

Therefore, in this application, the ratio of the chargeable capacity value of the energy storage unit 13 in each battery module to the sum of the chargeable capacity values of the energy storage units 13 respectively corresponding to the M battery modules may be used to adjust the current of the battery module or the power of the energy storage unit 13 in each battery module, so that charging power parameters corresponding to the battery modules are adjusted in equal proportion. Therefore, the battery modules complete charging simultaneously, and charging of the M battery modules is equalized. This helps the power supply 30 supplement the battery component 10 with electricity in a timely manner, and helps implement minimum charging duration of the battery component 10 and implement maximum backup duration after an input has power failure.

Based on the foregoing descriptions, when the charging power parameter is the current of the battery module, a feasible implementation in which the control unit 11 in each battery module may determine the reference value may include:

The control unit 11 in each battery module determines, as a charging coefficient, the ratio of the chargeable capacity value of the energy storage unit 13 in each battery module to the sum of the chargeable capacity values of the energy storage units 13 respectively corresponding to the M battery modules, and determines the reference value based on the charging coefficient and a sum of actual values of currents respectively corresponding to the M battery modules.

A manner of obtaining the sum of the actual values of the currents respectively corresponding to the M battery modules is similar to a manner of obtaining the sum of the chargeable capacity values of the energy storage units 13 respectively corresponding to the M battery modules. For details, refer to the foregoing descriptions. Details are not described herein again.

In a specific embodiment, the battery component 10 includes a first battery module and a second battery module, and the first battery module and the second battery module are connected in parallel. When the power supply 30 supplies power to the battery component 10, it is assumed that a chargeable capacity value of an energy storage unit 13 in the first battery module is Q11, a chargeable capacity value of an energy storage unit 13 in the second battery module is Q12, an actual value of a current of the first battery module is I11, and an actual value of a current of the second battery module is I12.

In this case, a control unit 11 in the first battery module may determine that a charging coefficient is Q11÷(Q11+Q12), and a reference value of the current of the corresponding first battery module is $Q11 \div (Q11+Q12) \times (I11+I12)$. Therefore, when the power supply 30 supplies power to the battery component 10, the control unit 11 in the first battery module may control, by using a corresponding DCDC converter 12, the actual value I11 of the current of the corresponding first battery module to be equal to or infinitely close to the reference value $Q11 \div (Q11+Q12) \times (I11+I12)$. It should be noted that Q11, Q12, 111, and I11 generally change in real time, and the foregoing control process is a dynamic process.

In this case, a control unit 11 in the second battery module may determine that a charging coefficient is $Q12 \div (Q11+Q12)$, and a reference value of the current of the corresponding second battery module is $Q12 \div (Q11+Q12) \times (I11+I12)$. Therefore, when the power supply 30 supplies power to the battery component 10, the control unit 11 in the second battery module may control, by using a corresponding DCDC converter 12, the actual value 112 of the current of the corresponding second battery module to be equal to or infinitely close to the reference value $Q12 \div (Q11+Q12) \times (I11+I12)$. It should be noted that Q11, Q12, 111, and 112 generally change in real time, and the foregoing control process is a dynamic process.

In conclusion, if Q11 is greater than Q12, the reference value of the current of the first battery module is greater than the reference value of the current of the second battery module. If Q11 is less than Q12, the reference value of the current of the first battery module is less than the reference value of the current of the second battery module. If Q11 is equal to Q12, the reference value of the current of the first battery module is equal to the reference value of the current of the second battery module.

Therefore, the current of each battery module is adjusted, so that in a same time period, a battery module with a large chargeable capacity is charged for a longer time than a battery module with a small chargeable capacity. Therefore, the M battery modules may complete charging simultaneously, and reach a charging end point simultaneously, and charging of the M battery modules is equalized. This helps the power supply 30 supplement the battery component 10 with electricity in a timely manner, and helps implement minimum charging duration of the battery component 10 and implement maximum backup duration after an input has power failure.

Based on the foregoing descriptions, when the charging power parameter is the power of the energy storage unit 13, a feasible implementation in which the control unit 11 in each battery module may determine the reference value may include:
The control unit 11 in each battery module determines, as a charging coefficient, the ratio of the chargeable capacity value of the energy storage unit 13 in each battery module to the sum of the chargeable capacity values of the energy storage units 13 respectively corresponding to the M battery modules, and determines the reference value based on the charging coefficient and a sum of actual values of powers of the energy storage units 13 respectively corresponding to the M battery modules.

A manner of obtaining the sum of the actual values of the powers of the energy storage units 13 respectively corresponding to the M battery modules is similar to a manner of obtaining the sum of the chargeable capacity values of the energy storage units 13 respectively corresponding to the M battery modules. For details, refer to the foregoing descriptions. Details are not described herein again. In addition, the power of the energy storage unit 13 in each battery module mentioned in this application is a product of the actual value of the current of the port of the energy storage unit 13 and the actual value of the voltage of the port of the energy storage unit 13, or is a product of an actual value of a current of a port of the battery module and a voltage of the port of the battery module.

In a specific embodiment, the battery component 10 includes a first battery module and a second battery module, and the first battery module and the second battery module are connected in parallel. When the power supply 30 supplies power to the battery component 10, it is assumed that a chargeable capacity value of an energy storage unit 13 in the first battery module is Q11, a chargeable capacity value of an energy storage unit 13 in the second battery module is Q12, an actual value of a power of the energy storage unit 13 in the first battery module is P11, and an actual value of a power of the energy storage unit 13 in the second battery module is P12.

In this case, a control unit 11 in the first battery module may determine that a charging coefficient is $Q11 \div (Q11+Q12)$, and a reference value of the power of the corresponding energy storage unit 13 is $Q11 \div (Q11+Q12) \times (P11+P12)$. Therefore, when the power supply 30 supplies power to the battery component 10, the control unit 11 in the first battery module may control, by using a corresponding DCDC converter 12, the actual value P11 of the power of the corresponding energy storage unit 13 to be equal to or infinitely close to the reference value $Q11 \div (Q11+Q12) \times (P11+P12)$. It should be noted that Q11, Q12, P11, and P12 generally change in real time, and the foregoing control process is a dynamic process.

In this case, a control unit 11 in the second battery module may determine that a charging coefficient is $Q12 - (Q11+Q12)$, and a reference value of the power of the corresponding energy storage unit 13 is $Q12 \div (Q11+Q12) \times (P11+P12)$. Therefore, when the power supply 30 supplies power to the battery component 10, the control unit 11 in the second battery module may control, by using a corresponding DCDC converter 12, the actual value P12 of the power of the corresponding energy storage unit 13 to be equal to or infinitely close to the reference value $Q12 \div (Q11+Q12) \times (P11+P12)$. It should be noted that Q11, Q12, P11, and P12 generally change in real time, and the foregoing control process is a dynamic process.

In conclusion, if Q11 is greater than Q12, the reference value of the power of the energy storage unit 13 in the first battery module is greater than the reference value of the power of the energy storage unit 13 in the second battery module. If Q11 is less than Q12, the reference value of the power of the energy storage unit 13 in the first battery module is less than the reference value of the power of the energy storage unit 13 in the second battery module. If Q11 is equal to Q12, the reference value of the power of the energy storage unit 13 in the first battery module is equal to the reference value of the power of the energy storage unit 13 in the second battery module.

Therefore, the power of the energy storage unit 13 in each battery module is adjusted, so that in a same time period, a battery module with a large chargeable capacity is charged for a longer time than a battery module with a small chargeable capacity. Therefore, the M battery modules may complete charging simultaneously, and reach a charging end point simultaneously, and charging of the M battery modules is equalized. This helps the power supply 30 supplement the battery component 10 with electricity in a timely manner, and helps implement minimum charging duration of the battery component 10 and implement maximum backup duration after an input has power failure.

Therefore, when the energy storage unit 13 supplies power to the load 20, each battery module is discharged based on a ratio of a dischargeable capacity value of the energy storage unit 13 in each battery module to a sum of dischargeable capacity values of the energy storage units 13 respectively corresponding to the M battery modules, so that the M battery modules are discharged in equal proportion based on respective dischargeable capacity values, that is, in a same time period, a battery module with a large dischargeable capacity is discharged for a longer time than a battery module with a small dischargeable capacity. Therefore, the M battery modules may complete discharging simultaneously, and reach a discharging end point simultaneously, to implement maximum backup duration.

The control unit 11 in each battery module may obtain the dischargeable capacity value of the corresponding energy storage unit 13 in a plurality of manners. For example, the control unit 11 may determine a difference between the maximum storage capacity value of the energy storage unit 13 and the chargeable capacity value of the energy storage unit 13 as the dischargeable capacity value of the energy storage unit 13. For a specific implementation of the chargeable capacity value of the energy storage unit 13, refer to the foregoing descriptions. Details are not described herein again.

A manner of obtaining the sum of the dischargeable capacity values of the energy storage units 13 respectively corresponding to the M battery modules is similar to a manner of obtaining the sum of the chargeable capacity values of the energy storage units 13 respectively corresponding to the M battery modules. For details, refer to the foregoing descriptions. Details are not described herein again.

Therefore, in this application, the ratio of the dischargeable capacity value of the energy storage unit 13 in each battery module to the sum of the dischargeable capacity values of the energy storage units 13 respectively corresponding to the M battery modules may be used to adjust a discharging power parameter corresponding to each battery module, so that the dischargeable capacity values of the energy storage units 13 in the battery modules are adjusted in equal proportion. Therefore, the battery modules complete discharging simultaneously and implement undervoltage protection, and discharging of the M battery modules is equalized. This helps the battery component 10 supply power to the load 20 in a timely manner, and helps implement maximum backup duration of the battery component 10.

Based on the foregoing descriptions, when the discharging power parameter is the current of the battery module, a feasible implementation in which the control unit 11 in each battery module may determine the reference value may include:

The control unit in each battery module determines, as a discharging coefficient, the ratio of the dischargeable capacity value of the energy storage unit 13 in each battery module to the sum of the dischargeable capacity values of the energy storage units 13 respectively corresponding to the M battery modules, and determines the reference value based on the discharging coefficient and a sum of actual values of currents respectively corresponding to the M battery modules.

In a specific embodiment, the battery component 10 includes a first battery module and a second battery module, and the first battery module and the second battery module are connected in parallel. When the battery component 10 supplies power to the load 20, it is assumed that a dischargeable capacity value of an energy storage unit 13 in the first battery module is Q21, a dischargeable capacity value of an energy storage unit 13 in the second battery module is Q22, an actual value of a current of the first battery module is I21, and an actual value of a current of the second battery module is I22.

In this case, a control unit 11 in the first battery module may determine that a discharging coefficient is $Q21 \div (Q21+Q22)$, and a reference value of the current of the corresponding first battery module is $Q21 \div (Q21+Q12) \times (I21+I22)$. Therefore, when the battery component 10 supplies power to the load 20, the control unit 11 in the first battery module may control, by using a corresponding DCDC converter 12, the actual value I21 of the current of the corresponding first battery module to be equal to or infinitely close to the reference value $Q21 \div (Q21+Q22) \times (I21+I22)$. It should be noted that Q21, Q22, I21, and I22 generally change in real time, and the foregoing control process is a dynamic process.

In this case, a control unit 11 in the second battery module may determine that a discharging coefficient is $Q22 \div (Q21+Q22)$, and a reference value of the current of the corresponding second battery module is $Q22 \div (Q21+Q22) \times (I21+I22)$. Therefore, when the battery component 10 supplies power to the load 20, the control unit 11 in the second battery module may control, by using a corresponding DCDC converter 12, the actual value I22 of the current of the corresponding second battery module to be equal to or infinitely close to the reference value $Q22 \div (Q21+Q22) \times (I21+I22)$. It should be noted that Q21, Q22, I21, and I22 generally change in real time, and the foregoing control process is a dynamic process.

In conclusion, if Q21 is greater than Q22, the reference value of the current of the first battery module is greater than the reference value of the current of the second battery module. If Q21 is less than Q22, the reference value of the current of the first battery module is less than the reference value of the current of the second battery module. If Q21 is equal to Q22, the reference value of the current of the first battery module is equal to the reference value of the current of the second battery module.

Therefore, the current of each battery module is adjusted, so that in a same time period, a battery module with a large dischargeable capacity is discharged for a longer time than a battery module with a small dischargeable capacity. Therefore, the M battery modules may complete discharging simultaneously, and reach a discharging end point simultaneously, and discharging of the M battery modules is equalized. This helps the battery component 10 supplement the load 20 with electricity in a timely manner, and helps implement maximum backup duration of the battery component 10.

Based on the foregoing descriptions, when the discharging power parameter is the power of the energy storage unit 13, a feasible implementation in which the control unit 11 in each battery module may determine the reference value may include:
The control unit 11 in each battery module determines, as a discharging coefficient, the ratio of the dischargeable capacity value of the energy storage unit 13 in each battery module to the sum of the dischargeable capacity values of the energy storage units 13 respectively corresponding to the M battery modules, and determines the reference value based on the discharging coefficient and a sum of actual values of powers of the energy storage units 13 respectively corresponding to the M battery modules.

In a specific embodiment, the battery component 10 includes a first battery module and a second battery module, and the first battery module and the second battery module are connected in parallel. When the battery component 10 supplies power to the load 20, it is assumed that a dischargeable capacity value of an energy storage unit 13 in the first battery module is Q21, a dischargeable capacity value of an energy storage unit 13 in the second battery module is Q22, an actual value of a power of the energy storage unit 13 in the first battery module is P21, and an actual value of a power of the energy storage unit 13 in the second battery module is P22.

In this case, a control unit 11 in the first battery module may determine that a discharging coefficient is $Q21 \div (Q21+Q22)$, and a reference value of the power of the corresponding energy storage unit 13 is $Q21 \div (Q21+Q22) \times (P21+P22)$. Therefore, when the battery component 10 supplies power to the load 20, the control unit 11 in the first battery module may control, by using a corresponding DCDC converter 12, the actual value P21 of the power of the corresponding energy storage unit 13 to be equal to or infinitely close to the reference value $Q21 \div (Q21+Q22) \times (P21+P22)$. It should be noted that Q21, Q22, P21, and P22 generally change in real time, and the foregoing control process is a dynamic process.

In this case, a control unit 11 in the second battery module may determine that a discharging coefficient is $Q22 \div (Q21+Q22)$, and a reference value of the power of the corresponding energy storage unit 13 is $Q22 \div (Q21+Q22) \times (P21+P22)$. Therefore, when the battery component 10 supplies power to the load 20, the control unit 11 in the second battery module may control, by using a corresponding DCDC converter 12, the actual value P22 of the power of the corresponding energy storage unit 13 to be equal to or infinitely close to the reference value $Q22 \div (Q21+Q22) \times (P21+P22)$. It should be noted that Q21, Q22, P21, and P22 generally change in real time, and the foregoing control process is a dynamic process.

In conclusion, if Q21 is greater than Q22, the reference value of the power of the energy storage unit 13 in the first battery module is greater than the reference value of the power of the energy storage unit 13 in the second battery module. If Q21 is less than Q22, the reference value of the power of the energy storage unit 13 in the first battery module is less than the reference value of the power of the energy storage unit 13 in the second battery module. If Q21 is equal to Q22, the reference value of the power of the energy storage unit 13 in the first battery module is equal to the reference value of the power of the energy storage unit 13 in the second battery module.

Therefore, the power of the energy storage unit 13 in each battery module is adjusted, so that in a same time period, a battery module with a large dischargeable capacity is discharged for a longer time than a battery module with a small dischargeable capacity. Therefore, the M battery modules complete discharging simultaneously, and reach a discharging end point simultaneously, and discharging of the M battery modules is equalized. This helps the battery component 10 supplement the load 20 with electricity in a timely manner, and helps implement maximum backup duration of the battery component 10.

In this application, the voltage of the energy storage unit reflects a capacity of the energy storage unit to a degree, that is, a battery capacity used in the foregoing equalization process may be replaced with a voltage of a corresponding energy storage unit, or both a capacity and a voltage are considered according to a specific rule, for example, a proportion relationship between different capacities and different voltages is determined based on different voltage segments. Voltages respectively corresponding to the M battery modules are calculated in a same manner. A calculated value of the voltage of the battery module may include a plurality of implementations.

When the power supply 30 supplies power to the energy storage unit 13, in some embodiments, when one battery module includes N energy storage units 13, each energy storage unit 13 has a chargeable voltage range (for example, $[u1i, u2i]$, where i is a positive integer greater than or equal to 1 and less than or equal to N, $u1i$ is a real-time voltage of an $i^{th}$ energy storage unit 13, and $u2i$ is a charging voltage upper limit, namely, a voltage existing when the $i^{th}$ energy storage unit 13 is fully charged) at any moment. Therefore, calculated values of voltages of all the energy storage units 13 in each battery module may be a minimum voltage value min $(u1imin)$ of the energy storage units 13, or may be a maximum voltage value max $(u1imax)$ of all the energy storage units 13, or may be an average value $\sum(u2i-u1i)/N$ of the chargeable voltage ranges respectively corresponding to all the energy storage units 13, or may be a sum $\sum(u2i-u1i)$ of the chargeable voltage ranges respectively corresponding to all the energy storage units 13, or may be a sum $\sum u1i$ of voltages respectively corresponding to all the energy storage units 13 in the energy storage unit 13, or may be a logical value used to indicate any one of the foregoing parameters. This is not limited in this application.

When the energy storage unit 13 supplies power to the load 20, in some embodiments, when the energy storage unit 13 includes a plurality of energy storage units 13, each energy storage unit 13 has a dischargeable voltage range (for example, $[u1i, u3i]$, where i is positive integer greater than or equal to 1 and less than or equal to N, $u1i$ is a real-time voltage of an $i^{th}$ energy storage unit 13, and $u3i$ is a discharging voltage lower limit, namely, a voltage existing when the $i^{th}$ energy storage unit 13 is discharged for undervoltage protection). Therefore, a calculated value of a voltage of the energy storage units 13 in each battery module may be minimum voltage values min $(u1imin)$ respectively corresponding to the energy storage units 13, or may be maximum voltage values max $(u1imax)$ respectively corresponding to all the energy storage units 13, or may be an average value $\sum(u1i-u3i)/N$ of the dischargeable voltage ranges respectively corresponding to all the energy storage units 13, or may be a sum $\sum(u1i-u3i)$ of the dischargeable voltage ranges respectively corresponding to all the energy storage units 13, or may be a sum $\sum u1i$ of voltages respectively corresponding to all the energy storage units 13 in the battery module, or may be a logical value used to indicate any one of the foregoing parameters. This is not limited in this application.

Therefore, when the power supply 30 supplies power to the energy storage unit 13, each battery module is charged based on a ratio of a calculated value of a voltage of each battery module to a sum of calculated values of voltages respectively corresponding to the M battery modules, so that the M battery modules are charged in equal proportion based on respective target voltages, that is, in a same period, a battery module with a large calculated value of a voltage is charged for a longer time than a battery module with a small calculated value of a voltage. Therefore, the M battery modules may complete charging simultaneously, and reach a charging end point simultaneously.

A manner of obtaining the sum of the calculated values of the voltages of the energy storage units 13 respectively corresponding to the M battery modules is similar to a manner of obtaining the sum of the chargeable capacity values of the energy storage units 13 respectively corresponding to the M battery modules. For details, refer to the foregoing descriptions. Details are not described herein again.

Therefore, in this application, the ratio of the calculated value of the voltage to the sum of the calculated values of the voltages respectively corresponding to the M battery modules may be used to adjust a charging power parameter corresponding to each battery module, so that the voltages of the energy storage units 13 in the battery modules are adjusted in equal proportion. Therefore, the battery modules complete charging simultaneously, and charging of the M battery modules is equalized. This helps the power supply 30 supplement the battery component 10 with electricity in a timely manner, and helps implement maximum backup duration of the battery component 10.

Based on the foregoing descriptions, when the charging power parameter is the current of the battery module, a feasible implementation in which the control unit 11 in each battery module may determine the reference value may include:

The control unit 11 in each battery module determines, as a charging coefficient, the ratio of the calculated value of the voltage of the energy storage unit 13 to the sum of the calculated values of the voltages of the energy storage units 13 respectively corresponding to the M battery modules, and determines the reference value based on the charging coefficient and a sum of actual values of currents respectively corresponding to the M battery modules.

In a specific embodiment, the battery component 10 includes a first battery module and a second battery module, and the first battery module and the second battery module are connected in parallel. When the power supply 30 supplies power to the battery component 10, it is assumed that a calculated value U31 of a voltage of an energy storage unit 13 in the first battery module is a maximum chargeable voltage value of all energy storage units 13 in the first battery module, a calculated value U32 of a voltage of an energy storage unit 13 in the second battery module is a maximum chargeable voltage value of all energy storage units 13 in the second battery module, an actual value of a current of the first battery module is I31, and an actual value of a current of the second battery module is I32.

In this case, a control unit 11 in the first battery module may determine that a charging coefficient is $U31 \div (U31+U32)$, and a reference value of the current of the corresponding first battery module is $U31 \div (U31+U32) \times (I31+I32)$. Therefore, when the power supply 30 supplies power to the battery component 10, the control unit 11 in the first battery module may control, by using a corresponding DCDC converter 12, the actual value I31 of the current of the corresponding first battery module to be equal to or infinitely close to the reference value $U31 \div (U31+U32) \times (I31+I32)$. It should be noted that I31 and I32 generally change in real time, and the foregoing control process is a dynamic process.

In this case, a control unit 11 in the second battery module may determine that a charging coefficient is $U32 \div (U31+U32)$, and a reference value of the current of the corresponding second battery module is $U32 \div (U31+U32) \times (I31+I32)$. Therefore, when the power supply 30 supplies power to the battery component 10, the control unit 11 in the second battery module may control, by using a corresponding DCDC converter 12, the actual value I32 of the current of the corresponding second battery module to be equal to or infinitely close to the reference value $U32 \div (U31+U32) \times (I31+I32)$. It should be noted that I32 generally changes in real time, and the foregoing control process is a dynamic process.

In conclusion, if U31 is greater than U32, the reference value of the current of the first battery module is greater than the reference value of the current of the second battery module. If U31 is less than U32, the reference value of the current of the first battery module is less than the reference value of the current of the second battery module. If U31 is equal to U32, the reference value of the current of the first battery module is equal to the reference value of the current of the second battery module.

Therefore, the current of each battery module is adjusted, so that in a same time period, a battery module with a large calculated value of a voltage is charged for a longer time than a battery module with a small calculated value of a voltage. Therefore, the M battery modules may complete charging simultaneously, and reach a charging end point simultaneously, and charging of the M battery modules is equalized. This helps the power supply 30 supplement the battery component 10 with electricity in a timely manner, and helps implement minimum charging duration of the battery component 10.

Based on the foregoing descriptions, when the charging power parameter is the power of the energy storage unit 13, a feasible implementation in which the control unit 11 in each battery module may determine the reference value may include:

The control unit 11 in each battery module determines, as a charging coefficient, the ratio of the calculated value of the voltage of the energy storage unit 13 to the sum of the calculated values of the voltages of the energy storage units 13 respectively corresponding to the M battery modules, and determines the reference value based on the charging coefficient and a sum of actual values of powers of the energy storage units 13 respectively corresponding to the M battery modules.

In a specific embodiment, the battery component 10 includes a first battery module and a second battery module, and the first battery module and the second battery module are connected in parallel. When the power supply 30 supplies power to the battery component 10, it is assumed that a calculated value U31 of a voltage of an energy storage unit 13 in the first battery module is a maximum chargeable voltage value of all energy storage units 13 in the first battery module, a calculated value U32 of a voltage of an energy storage unit 13 in the second battery module is a maximum chargeable voltage value of all energy storage units 13 in the second battery module, an actual value of a power of the energy storage unit 13 in the first battery module is P31, and an actual value of a power of the energy storage unit 13 in the second battery module is P32.

In this case, a control unit 11 in the first battery module may determine that a charging coefficient is $U31 \div (U31+U32)$, and a reference value of the power of the corresponding energy storage unit 13 is $U31 \div (U31+U32) \times (P31+P32)$. Therefore, when the power supply 30 supplies power to the battery component 10, the control unit 11 in the first battery module may control, by using a corresponding DCDC converter 12, the actual value P31 of the power of the corresponding energy storage unit 13 to be equal to or infinitely close to the reference value $U31 \div (U31+U32) \times (P31+P32)$. It should be noted that P31 and P32 generally change in real time, and the foregoing control process is a dynamic process.

In this case, a control unit 11 in the second battery module may determine that a charging coefficient is $U32 \div (U31+U32)$, and a reference value of the power of the corresponding energy storage unit 13 is $U32 \div (U31+U32) \times (P31+P32)$. Therefore, when the power supply 30 supplies power to the battery component 10, the control unit 11 in the second battery module may control, by using a corresponding DCDC converter 12, the actual value P32 of the power of the corresponding energy storage unit 13 to be equal to or infinitely close to the reference value $U32 \div (U31+U32) \times (P31+P32)$. It should be noted that P31 and P32 generally change in real time, and the foregoing control process is a dynamic process.

In conclusion, if U31 is greater than U32, the reference value of the power of the energy storage unit 13 in the first battery module is greater than the reference value of the power of the energy storage unit 13 in the second battery module. If U31 is less than U32, the reference value of the power of the energy storage unit 13 in the first battery module is less than the reference value of the power of the energy storage unit 13 in the second battery module. If U31 is equal to U32, the reference value of the power of the energy storage unit 13 in the first battery module is equal to the reference value of the power of the energy storage unit 13 in the second battery module.

Therefore, the power of the energy storage unit 13 in each battery module is adjusted, so that in a same time period, a battery module with a large calculated value of a voltage is charged for a longer time than a battery module with a small calculated value of a voltage. Therefore, the M battery modules may complete charging simultaneously, and reach a charging end point simultaneously, and charging of the M battery modules is equalized. This helps the power supply 30 supplement the battery component 10 with electricity in a timely manner, and helps implement minimum charging duration of the battery component 10.

Therefore, when the energy storage unit 13 supplies power to the load 20, each battery module is discharged based on a ratio of a calculated value of a voltage of the energy storage unit 13 to a sum of calculated values of voltages of the energy storage units 13 respectively corresponding to the M battery modules, so that the M battery modules are discharged in equal proportion based on voltages of respective energy storage units 13, that is, in a same period, a battery module with a large calculated value of a voltage is discharged for a longer time than a battery module with a small calculated value of a voltage. Therefore, the M battery modules may complete discharging simultaneously, and reach a discharging end point simultaneously.

Therefore, in this application, the ratio of the calculated value of the voltage of the energy storage unit 13 to the sum of the calculated values of the voltages of the energy storage units 13 respectively corresponding to the M battery modules may be used to adjust a discharging power parameter corresponding to each battery module, so that the voltages of the energy storage units 13 in the battery modules are adjusted in equal proportion. Therefore, the battery modules complete discharging simultaneously, and discharging of the M battery modules is equalized. This helps the power supply 30 supplement the load 20 with electricity in a timely manner, and helps implement maximum backup duration of the battery component 10.

Based on the foregoing descriptions, when the discharging power parameter is the current of the battery module, a feasible implementation in which the control unit 11 in each battery module may determine the reference value may include:

The control unit 11 in each battery module determines, as a discharging coefficient, the ratio of the calculated value of the voltage of the energy storage unit 13 to the sum of the calculated values of the voltages of the energy storage units 13 respectively corresponding to the M battery modules, and determines the reference value based on the discharging coefficient and a sum of actual values of currents respectively corresponding to the M battery modules.

In a specific embodiment, the battery component 10 includes a first battery module and a second battery module, and the first battery module and the second battery module are connected in parallel. When the battery component 10 supplies power to the load 20, it is assumed that a calculated value U41 of a voltage of an energy storage unit 13 in the first battery module is a minimum dischargeable voltage value of all energy storage units 13 in the first battery module, a calculated value U42 of a voltage of an energy storage unit 13 in the second battery module is a minimum dischargeable voltage value of all energy storage units 13 in the second battery module, an actual value of a current of the first battery module is I41, and an actual value of a current of the second battery module is I42.

In this case, a control unit 11 in the first battery module may determine that a discharging coefficient is $U41 \div (U41 + U42)$, and a reference value of the current of the corresponding first battery module is $U41 \div (U41 + U42) \times (I41 + I42)$. Therefore, when the battery component 10 releases electricity to the load 20, the control unit 11 in the first battery module may control, by using a corresponding DCDC converter 12, the actual value I41 of the current of the corresponding first battery module to be equal to or infinitely close to the reference value $U41 \div (U41 + U42) \times (I41 + I42)$. It should be noted that I41 and I42 generally change in real time, and the foregoing control process is a dynamic process.

In this case, a control unit 11 in the second battery module may determine that a discharging coefficient is $U42 \div (U41 + U42)$, and a reference value of the current of the corresponding second battery module is $U42 \div (U41 + U42) \times (I41 + I42)$. Therefore, when the battery component 10 releases electricity to the load 20, the control unit 11 in the second battery module may control, by using a corresponding DCDC converter 12, the actual value I42 of the current of the corresponding second battery module to be equal to or infinitely close to the reference value $U42 \div (U41 + U42) \times (I41 + I42)$. It should be noted that I42 generally changes in real time, and the foregoing control process is a dynamic process.

In conclusion, if U41 is greater than U42, the reference value of the current of the first battery module is greater than the reference value of the current of the second battery module. If U41 is less than U42, the reference value of the current of the first battery module is less than the reference value of the current of the second battery module. If U41 is equal to U42, the reference value of the current of the first battery module is equal to the reference value of the current of the second battery module.

Therefore, the current of each battery module is adjusted, so that in a same time period, a battery module with a large calculated value of a voltage is discharged for a longer time than a battery module with a small calculated value of a voltage. Therefore, the M battery modules may complete discharging simultaneously, and reach a discharging end point simultaneously, and discharging of the M battery modules is equalized. This helps the battery component 10 supplement the load 20 with electricity in a timely manner, and helps implement maximum backup duration of the battery component 10.

Based on the foregoing descriptions, when the discharging power parameter is the power of the energy storage unit 13, a feasible implementation in which the control unit 11 in each battery module may determine the reference value may include:

The control unit 11 in each battery module determines, as a discharging coefficient, the ratio of the calculated value of the voltage of the energy storage unit 13 to the sum of the calculated values of the voltages of the energy storage units 13 respectively corresponding to the M battery modules, and determines the reference value based on the discharging coefficient and a sum of actual values of powers of the energy storage units 13 respectively corresponding to the M battery modules.

In a specific embodiment, the battery component 10 includes a first battery module and a second battery module, and the first battery module and the second battery module are connected in parallel. When the battery component 10 supplies power to the load 20, it is assumed that a calculated value U41 of a voltage of an energy storage unit 13 in the first battery module is a minimum dischargeable voltage value of all energy storage units 13 in the first battery module, a calculated value U42 of a voltage of an energy storage unit 13 in the second battery module is a minimum dischargeable voltage value of all energy storage units 13 in the second battery module, an actual value of a power of the energy storage unit 13 in the first battery module is P41, and an actual value of a power of the energy storage unit 13 in the second battery module is P42.

In this case, a control unit 11 in the first battery module may determine that a discharging coefficient is $U41 \div (U41+U42)$, and a reference value of the power of the corresponding energy storage unit 13 is $U41 \div (U41+U42) \times (P41+P42)$. Therefore, when the battery component 10 releases electricity to the load 20, the control unit 11 in the first battery module may control, by using a corresponding DCDC converter 12, the actual value P41 of the power of the corresponding energy storage unit 13 to be equal to or infinitely close to the reference value $U41 \div (U41+U42) \times (P41+P42)$. It should be noted that P41 and P42 generally change in real time, and the foregoing control process is a dynamic process.

In this case, a control unit 11 in the second battery module may determine that a discharging coefficient is $U42 \div (U41+U42)$, and a reference value of the power of the corresponding energy storage unit 13 is $U42 \div (U41+U42) \times (P41+P42)$. Therefore, when the battery component 10 releases electricity to the load 20, the control unit 11 in the second battery module may control, by using a corresponding DCDC converter 12, the actual value P42 of the power of the corresponding energy storage unit 13 to be equal to or infinitely close to the reference value $U42 \div (U41+U42) \times (P41+P42)$. It should be noted that P41 and P42 generally change in real time, and the foregoing control process is a dynamic process.

In conclusion, if U41 is greater than U42, the reference value of the current of the first battery module is greater than the reference value of the current of the second battery module. If U41 is less than U42, the reference value of the current of the first battery module is less than the reference value of the current of the second battery module. If U41 is equal to U42, the reference value of the current of the first battery module is equal to the reference value of the current of the second battery module.

Therefore, the power of the energy storage unit 13 in each battery module is adjusted, so that in a same time period, a battery module with a large calculated value of a voltage is discharged for a longer time than a battery module with a small calculated value of a voltage. Therefore, the M battery modules may complete discharging simultaneously, and reach a discharging end point simultaneously, and discharging of the M battery modules is equalized. This helps implement maximum backup duration of the battery component 10.

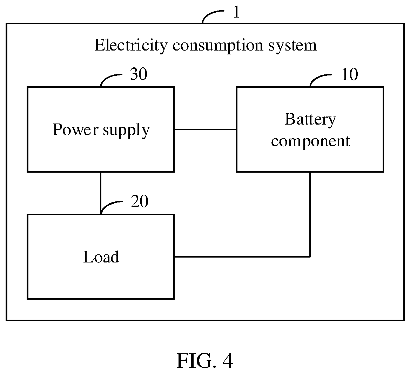

FIG. 4 is a schematic diagram of a structure of an electricity consumption system according to an embodiment of this application. As shown in FIG. 4, an electricity consumption system 1 in this application may include a load 20, a power supply 30, and a battery component 10.

The electricity consumption system 1 is applicable to a high-power backup scenario. For example, the electricity consumption system 1 may be a data center, a communication station, and an energy storage power station. The load 20 is various devices or modules that need to consume power. A specific type of the load 20 is not limited in this application. For specific implementations of the battery component 10 and the power supply 30, refer to the foregoing descriptions. Details are not described herein again.

The power supply 30 supplies power to the battery component 10 and the load 20. When the input power supply 30 has power failure or the battery component 10 needs to be discharged, the battery component 10 supplies power to the load 20, to ensure that the electricity consumption system 1 can run normally.

The electricity consumption system 1 in this application may be configured to execute the technical solutions in the embodiments shown in FIG. 1 to FIG. 3. Implementation principles and technical effects thereof are similar. For operations implemented by the modules, further refer to related descriptions in the method embodiments. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A charging/discharging equalization control method, applied to a battery component, wherein the battery component comprises M battery modules, the M battery modules are connected in parallel, M is a positive integer greater than 1, each battery module comprises a control unit, a DCDC converter, and an energy storage unit, the control unit is electrically connected to the DCDC converter, and the DCDC converter is further electrically connected to a load and/or a power supply;
    for each battery module, the method comprises:

    determining, by the control unit, a reference value of a power parameter, wherein the reference value is used to equalize charging/discharging of the M battery modules; and
    controlling, by the control unit by using the DCDC converter, an actual value of the power parameter to be equal to the reference value.

2.  The method according to claim 1, wherein the controlling, by the control unit by using the DCDC converter, an actual value of the power parameter to be equal to the reference value comprises:
    inputting, by the control unit based on the reference value, a control signal to the DCDC converter in a loop control manner, wherein the control signal is used to control the actual value of the power parameter to be equal to the reference value.

3.  The method according to claim 1 or 2, wherein when the power parameter is a current of the battery module, the determining, by the control unit, a reference value of a power parameter comprises:

    when the power supply supplies power to the energy storage unit, determining, by the control unit, a charging coefficient, and determining the reference value based on the charging coefficient and a sum of actual values of currents respectively corresponding to the M battery module; and
    when the energy storage unit supplies power to the load, determining, by the control unit, a discharging coefficient, and determining the reference value based on the discharging coefficient and a sum of actual values of currents respectively corresponding to the M battery modules.

4.  The method according to claim 1 or 2, wherein when the power parameter is a power of the energy storage unit, the determining, by the control unit, a reference value of a power parameter comprises:

    when the power supply supplies power to the energy storage unit, determining, by the control unit, a charging coefficient, and determining the reference value based on the charging coefficient and a sum of actual values of powers of energy storage units respectively corresponding to the M battery modules; and
    when the energy storage unit supplies power to the load, determining, by the control unit, a discharging coefficient, and determining the reference value based on the discharging coefficient and a sum of actual values of powers of energy storage units respectively corresponding to the M battery modules.

5.  The method according to claim 3 or 4, wherein

    the charging coefficient is a ratio of a chargeable capacity value of the energy storage unit to a sum of chargeable capacity values of the energy storage units respectively corresponding to the M battery modules; or
    the charging coefficient is a ratio of a calculated value of a voltage of the energy storage unit to a sum of calculated values of voltages of the energy storage units respectively corresponding to the M battery modules.

6.  The method according to claim 3 or 4, wherein

    the discharging coefficient is a ratio of a dischargeable capacity value of the energy storage unit to a sum of dischargeable capacity values of the energy storage units respectively corresponding to the M battery modules; or
    the discharging coefficient is a ratio of a calculated value of a voltage of the energy storage unit to a sum of calculated values of voltages of the energy storage units respectively corresponding to the M battery modules.

7.  The method according to claim 5 or 6, wherein the energy storage unit comprises a plurality of energy storage units, and the calculated value of the voltage of the energy storage unit comprises any one of the following:

    a lowest voltage value or a highest voltage value of all the energy storage units;

an average voltage value of all the energy storage units;

a sum of voltages of all the energy storage units; or

a logical value having an association relationship with any one of a lowest voltage value or a highest voltage value of all the energy storage units and an average voltage value of all the energy storage units or a sum of voltages of all the energy storage units.

8. A battery component, wherein the battery component comprises M battery modules, the M battery modules are connected in parallel, M is a positive integer greater than 1, each battery module comprises a control unit, a DCDC converter, and an energy storage unit, a first terminal of the DCDC converter is electrically connected to the control unit, a second terminal of the DCDC is electrically connected to the energy storage unit, and a third terminal of the DCDC converter is configured to be electrically connected to a load and/or a power supply;

for each battery module,
the control unit is configured to determine a reference value of a power parameter, wherein the reference value is used to equalize charging/discharging of the M battery modules; and
the control unit is further configured to control, by using the DCDC converter, an actual value of the power parameter to be equal to the reference value.

9. The battery component according to claim 8, wherein the control unit is specifically configured to input a control signal to the DCDC converter in a loop control manner based on the reference value, wherein the control signal is used to control the actual value of the power parameter to be equal to the reference value.

10. The battery component according to claim 8 or 9, wherein when the power parameter is a current of the battery module, the control unit is specifically configured to: when the power supply supplies power to the energy storage unit, determine, by the control unit, a charging coefficient, and determine the reference value based on the charging coefficient and a sum of actual values of currents respectively corresponding to the M battery modules; or when the energy storage unit supplies power to the load, determine, by the control unit, a discharging coefficient, and determine the reference value based on a sum of the discharging coefficient and a sum of actual values of currents respectively corresponding to the M battery modules.

11. The battery component according to claim 8 or 9, wherein when the power parameter is a power of the energy storage unit, the control unit is specifically configured to: when the power supply supplies power to the energy storage unit, determine, by the control unit, a charging coefficient, and determine the reference value based on the charging coefficient and a sum of actual values of powers of energy storage units respectively corresponding to the M battery modules; or when the energy storage unit supplies power to the load, determine, by the control unit, a discharging coefficient, and determine the reference value based on the discharging coefficient and a sum of actual values of powers of energy storage units respectively corresponding to the M battery modules.

12. The battery component according to claim 10 or 11, wherein

the charging coefficient is a ratio of a chargeable capacity value of the energy storage unit to a sum of chargeable capacity values of the energy storage units respectively corresponding to the M battery modules; or
the charging coefficient is a ratio of a calculated value of a voltage of the energy storage unit to a sum of calculated values of voltages of the energy storage units respectively corresponding to the M battery modules.

13. The battery component according to claim 10 or 11, wherein

the discharging coefficient is a ratio of a dischargeable capacity value of the energy storage unit to a sum of dischargeable capacity values of the energy storage units respectively corresponding to the M battery modules; or
the discharging coefficient is a ratio of a calculated value of a voltage of the energy storage unit to a sum of calculated values of voltages of the energy storage units respectively corresponding to the M battery modules.

14. The battery component according to claim 12 or 13, wherein the energy storage unit comprises a plurality of energy storage units, and the calculated value of the voltage of the energy storage unit comprises any one of the following:

a lowest voltage value or a highest voltage value of all the energy storage units;
an average voltage value of all the energy storage units;
a sum of voltages of all the energy storage units; or
a logical value having an association relationship with any one of a lowest voltage value or a highest voltage value of all the energy storage units and an average voltage value of all the energy storage units or a sum of voltages of all the energy storage units.

15. An electricity consumption system, comprising: a load, a power supply, and the battery component according to any one of claims 8 to 14, wherein the power supply supplies power to the battery component and the load, and the battery component is configured to supply power to the load when the input power supply has power failure or the battery component needs to be discharged, to ensure that the electricity consumption system runs normally.

10

Battery component

40

Power supply

30

Load

Battery module (1)

Battery module (2)

...

Battery module (M)

FIG. 1

FIG. 2

A control unit determines a reference value of a power parameter, where the reference value is used to equalize charging/discharging of M battery modules — 101

The control unit controls, by using a DCDC converter, an actual value of the power parameter to be equal to the reference value — 102

FIG. 3

FIG. 4

## INTERNATIONAL SEARCH REPORT

| International application No. |
|---|
| **PCT/CN2020/100148** |

### A. CLASSIFICATION OF SUBJECT MATTER

H02J 1/10(2006.01)i;  H02J 7/00(2006.01)i

According to International Patent Classification (IPC) or to both national classification and IPC

### B. FIELDS SEARCHED

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

TWTXT; EPTXT; USTXT; VEN; WOTXT; CNABS; CNTXT; CNKI: 电池, 储能, 并联, 参考, 给定, 预定, 目标, 平均, 电流, 功率, 电压, battery, energy storage, parallel, reference, given, preset, target, average, current, power, voltage

### C. DOCUMENTS CONSIDERED TO BE RELEVANT

| Category* | Citation of document, with indication, where appropriate, of the relevant passages | Relevant to claim No. |
|---|---|---|
| X | CN 111313527 A (XINJIANG ZONERGY COMPANY LIMITED) 19 June 2020 (2020-06-19)<br>    description, paragraphs 29-64 and figure 1 | 1, 8, 15 |
| Y | CN 111313527 A (XINJIANG ZONERGY COMPANY LIMITED) 19 June 2020 (2020-06-19)<br>    description, paragraphs 29-64 and figure 1 | 2-7, 9-14 |
| Y | CN 105098920 A (HARBIN INSTITUTE OF TECHNOLOGY, WEIHAI) 25 November 2015 (2015-11-25)<br>    description paragraphs 41-99 and figures 1a-1b | 2-7, 9-14 |
| Y | CN 109713660 A (SHANGHAI XILONG TECHNOLOGY CO., LTD. et al.) 03 May 2019 (2019-05-03)<br>    description, paragraphs 77-137 and figure 1 | 2-7, 9-14 |
| A | CN 111181207 A (CHONGQING UNIVERSITY OF TECHNOLOGY) 19 May 2020 (2020-05-19)<br>    entire document | 1-15 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 March 2021** | **29 March 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2020/100148** |

| C. | DOCUMENTS CONSIDERED TO BE RELEVANT | | |
| --- | --- | --- | --- |
| Category* | Citation of document, with indication, where appropriate, of the relevant passages | | Relevant to claim No. |
| A | CN 102832657 A (O2MICRO ELECTRONIC (WUHAN) CO., LTD.) 19 December 2012 (2012-12-19)<br>      entire document | | 1-15 |
| A | US 10003194 B2 (ENPHASE ENERGY INC) 19 June 2018 (2018-06-19)<br>      entire document | | 1-15 |

Form PCT/ISA/210 (second sheet) (January 2015)

**INTERNATIONAL SEARCH REPORT**
Information on patent family members

| International application No. |
| --- |
| **PCT/CN2020/100148** |

| Patent document cited in search report | | | Publication date (day/month/year) | Patent family member(s) | | | Publication date (day/month/year) |
| --- | --- | --- | --- | --- | --- | --- | --- |
| CN | 111313527 | A | 19 June 2020 | None | | | |
| CN | 105098920 | A | 25 November 2015 | CN | 105098920 | B | 15 September 2017 |
| CN | 109713660 | A | 03 May 2019 | None | | | |
| CN | 111181207 | A | 19 May 2020 | None | | | |
| CN | 102832657 | A | 19 December 2012 | CN | 102832657 | B | 25 March 2015 |
| | | | | TW | 201301716 | A | 01 January 2013 |
| | | | | TW | I474577 | B | 21 February 2015 |
| | | | | US | 2012319657 | A1 | 20 December 2012 |
| US | 10003194 | B2 | 19 June 2018 | WO | 2016065241 | A1 | 28 April 2016 |
| | | | | US | 2016118789 | A1 | 28 April 2016 |

Form PCT/ISA/210 (patent family annex) (January 2015)